# FASCICULE DE BREVET EUROPEEN

(11) **EP 2 125 234 B1**
(45) Date de publication et mention de la délivrance du brevet: **16.04.2014**
(21) Numéro de dépôt: 08719243.1
(22) Date de dépôt: 26.02.2008
(51) Int. Cl.: B02C 23/06, C09C 1/02, C09C 3/04, C09C 3/10, C09D 1/00, C09D 7/12, C08K 3/26

(54) **UTILISATION DANS UNE PEINTURE, D'UN CARBONATE DE CALCIUM BROYE A SEC AVEC UN COPOLYMERE DE L'ACIDE (METH) ACRYLIQUE AVEC UNE FONCTION ALCOXY OU HYDROXY POLYALKLENEGLYCOL**
VERWENDUNG VON TROCKEN ZERKLEINERTEM CALCIUMCARBONAT MIT (METH)ACRYLSÄURE-COPOLYMER MIT ALKOXY- ODER HYDROXYPOLYALKYLENGLYKOLFUNKTION IN EINEM ANSTRICHMITTEL
USE IN PAINT OF DRY-GROUND CALCIUM CARBONATE WITH (METH)ACRYLIC ACID COPOLYMER WITH ALKOXY OR HYDROXY POLYALKYLENE GLYCOL FUNCTION

(30) Priorité: 05.03.2007 FR 0701595
(43) Date de publication de la demande: 02.12.2009
(73) Titulaire: COATEX S.A.S., 69730 Genay (FR)
(72) Inventeur: SUAU, Jean-Marc, F-69480 Lucenay (FR); MONGOIN, Jacques, F-69650 Quincieux (FR); RUHLMANN, Denis, F-69730 Genay (FR); GUERRET, Olivier, F-69890 La Tour De Salvagny (FR)
(74) Mandataire: Fiorucci, Hélène
(86) Numéro de dépôt international: PCT/IB2008/000532
(87) Numéro de publication internationale: WO 2008/107786

(56) Documents cités:
- EP-A- 0 412 027
- WO-A-01/96007
- DATABASE WPI Section Ch, Week 199910 Thomson Scientific, London, GB; Class A60, AN 1999-114722 XP002464460 & JP 10 338518 A (KURIMOTO IRON WORKS LTD) 22 décembre 1998 (1998-12-22)

## Description

La présente invention concerne le domaine des peintures, lesdites peintures contenant au moins une matière minérale qui est un carbonate de calcium obtenu par broyage à sec.

Le broyage en voie sèche (par opposition au milieu aqueux) du carbonate de calcium est décrit dans les documents "Beitrag zur Aufklärung der Wirkungsweise von Mahlhilfsmitteln" ("Freiberger Forschungshefte" VEB Deutscher Verlag für Grundstoffindustrie, Leipzig, Germany (1975)). et "Calcium Carbonate" (Birkhäuser Verlag, 2001).

Ce broyage, qui correspond à une diminution de la tailles des particules individuelles de carbonate de calcium par action mécanique, est assisté par des agents de broyage qui peuvent être classés en 3 catégories suivantes.

La première comprend les acides faibles (formique, acétique, lactique, adipique comme cité dans le document FR 2 863 914, ou stéarique comme indiqué dans le document EP 0 510 890), et leurs sels (lignine sulfonate de sodium, acétate de sodium,...). La deuxième comprend les bases faibles, et notamment les amines (voir le document GB 2 179 268). La troisième, et la plus usitée car la plus efficace, comprend les alcools à base de glycols, dont notamment le diéthylène glycol illustré dans les documents WO 2002/081 573 et US 2003/019 399.

Or, même s'ils demeurent les plus efficaces, ces derniers conduisent à des carbonates de calcium présentant une quantité de composés organiques volatiles (COV) élevée. Aussi, trouver un solution alternative à ces agents d'aide au broyage à base de glycols, tout en demeurant au moins aussi efficaces qu'eux au niveau de l'application finale, constituerait une forte contribution à l'état de la technique.

A cet égard, un premier objet de l'invention consiste en l'utilisation dans une peinture, d'un carbonate de calcium caractérisé en ce que ledit carbonate est broyé à sec en présence d'un agent d'aide au broyage d'une part, et en ce que l'agent d'aide au broyage d'autre part est un copolymère constitué :
a) d'au moins un monomère anionique choisi parmi l'acide acrylique, l'acide méthacrylique et leurs mélanges,
b) et d'au moins un monomère non ionique, de formule (I) : 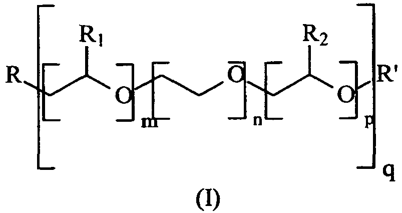 dans laquelle :
   - m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 4 atomes de carbone, R' étant très préférentiellement le radical méthyle,
   ou du mélange de plusieurs monomères de formule (I),
c) et éventuellement d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

On pourra désigner cet agent d'aide au broyage à travers l'expression de copolymère de l'acide (méth)acrylique avec un monomère portant une fonction alcoxy ou hydroxy polyalkylèneglycol.

Les exemples de la présente Demande démontrent que, en comparaison avec un carbonate de calcium broyé à sec avec un diéthylène glycol, un carbonate de calcium selon l'invention permet d'obtenir un ciment avec un degré d'étalement beaucoup plus important.

Cette utilisation est aussi caractérisée en ce que ledit copolymère est constitué, exprimé en pourcentage en poids des monomères (la somme des pourcentages en poids de tous les monomères étant égale à 100 %) :
a) de 0,5 % à 50 %, préférentiellement de 1 % à 25 %, très préférentiellement de 5 % à 20 %, d'au moins un monomère anionique choisi parmi l'acide acrylique, l'acide méthacrylique et leurs mélanges,
b) de 50 % à 99,5 %, préférentiellement de 75 % à 99 %, très préférentiellement de 80 % à 95 %, d'au moins un monomère non ionique, de formule (I) : 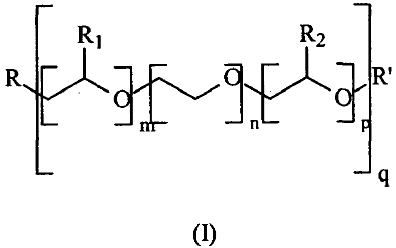 dans laquelle :
   - m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 4 atomes de carbone, R' étant très préférentiellement le radical méthyle,
   ou du mélange de plusieurs monomères de formule (I),
c) et de 0 % à 50 % d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

Cette utilisation est aussi caractérisée en ce que ledit copolymère est obtenu sous forme acide et éventuellement distillé, et est éventuellement partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est choisi parmi la triéthanolamine et l'hydroxyde de sodium.

Cette utilisation est aussi caractérisée en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit copolymère peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.
L'une des phases correspond alors au polymère utilisé selon l'invention.

Cette utilisation est aussi caractérisée en ce qu'on met en oeuvre de 0,05 % à 5 %, préférentiellement de 0,1 % à 3 %, très préférentiellement de 0,1 % à 1 % en poids sec dudit copolymère, par rapport au poids sec de carbonate de calcium pendant le broyage à sec dudit carbonate.

Un deuxième objet de l'invention est constitué des peintures obtenues par utilisation du carbonate de calcium broyé à sec selon l'invention.

### EXEMPLES

Dans ces exemples, tous les broyages sont réalisés selon une méthode bien connue de l'homme du métier (le document FR 2 901 491 décrivant une telle méthode). On se contente ici d'indiquer la granulométrie finale des particules de carbonate de calcium obtenues après broyage (l'homme du métier sachant en réalité comment adapter les paramètres du procédé en vue d'aboutir à une telle granulométrie ; on pourra toutefois se reporter aussi au document précité).

Dans chacun des essais n° 1 à 4, on réalise une peinture mate en phase aqueuse par mélange sous agitation des différents constituants, dans les proportions en grammes telles qu'indiquées dans le tableau 1.

| Essai n° | 1 | 2 | 3 | 4 |
|---|---|---|---|---|
| Art Antérieur (AA) / Invention (IN) | AA | IN | AA | IN |
| Eau | 292,0 | 292,0 | 292,0 | 292,0 |
| Ammoniaque (solution à 31 %) | 2,0 | 2,0 | 2,0 | 2,0 |
| Coatex™ P90 (solution à 40%) | 4,0 | 4,0 | 4,0 | 4,0 |
| Mergal™ K6N | 2,0 | 2,0 | 2,0 | 2,0 |
| Byk™ 034 | 2,0 | 2,0 | 2,0 | 2,0 |
| TiO2 RL68 | 41,0 | 41,0 | 41,0 | 41,0 |
| Omyacoat™ 850 OG | 215,0 | 215,0 | 215,0 | 215,0 |
| CaCO3 broyé à sec selon l'essai n°1 | 328,0 | 0 | 0 | 0 |
| CaCO3 broyé à sec selon l'essai n°2 | 0 | 328,0 | 0 | 0 |
| CaCO3 broyé à sec selon l'essai n°3 | 0 | 0 | 328,0 | 0 |
| CaCO3 broyé à sec selon l'essai n°4 | 0 | 0 | 0 | 328,0 |
| Acronal™ 290D | 82,0 | 82,0 | 82,0 | 82,0 |
| Monoéthylène glycol | 10,0 | 10,0 | 10,0 | 10,0 |
| Texanol™ | 10,0 | 10,0 | 10,0 | 10,0 |
| Rheo™ 3000 | 12,0 | 12,0 | 12,0 | 12,0 |
| Total (g) | 1000,0 | 1000,0 | 1000,0 | 1000,0 |

| | | | | |
|---|---|---|---|---|
| Coatex™ P90 désigne un épaississant commercialisé par la société COATEX™, Rheo™ 3000 désigne un épaississant commercialisé par la société COATEX™, Mergal™ K6N désigne un bactéricide commercialisé par la société TROY™, Byk™ 034 désigne un agent antimousse commercialisé par la société BYK™, TiO2 RL68 désigne une poudre de dioxyde de titane commercialisée par la société MILLENIUM™, Omyacoat™ 850 OG désigne un carbonate de calcium commercialisé par la société OMYA™, Acronal™ 290 D désigne un liant commercialisé par la société BASF™, Texanol™ désigne un agent de coalescence commercialisé par la société ESATMANN™, | | | | |

### Essai n° 1

Cet essai illustre l'art antérieur et met en oeuvre un carbonate de calcium obtenu par broyage à sec en présence de 3000 ppm (par rapport au poids sec de carbonate de calcium) d'un agent de broyage de l'art antérieur qui est le diéthylène glycol.
On obtient, après broyage, un carbonate de calcium dont 73,8 % et 48,5 % en poids des particules ont un diamètre moyen inférieur respectivement à 2 µm et 1 µm (tel que mesuré à partir d'un Sedigraph™ 5100).

### Essai n° 2

Cet essai illustre l'art antérieur et met en oeuvre un carbonate de calcium obtenu par broyage à sec en présence de 3000 ppm (par rapport au poids sec de carbonate de calcium) d'un agent de broyage de l'invention qui est un polymère composé, en pourcentage en poids, de 81,5 % de méthacrylate de méthoxy polyéthylène glycol de poids moléculaire 2000, de 4,9 % d'acide méthacrylique, et de 13,6 % d'acide acrylique. On obtient, après broyage, un carbonate de calcium dont 74,5 % et 44,1 % en poids des particules ont un diamètre moyen inférieur respectivement à 2 µm et 1 µm (tel que mesuré à partir d'un Sedigraph™ 5100).

### Essai n° 3

Cet essai illustre l'art antérieur et met en oeuvre un carbonate de calcium obtenu par broyage à sec en présence de 1400 ppm (par rapport au poids sec de carbonate de calcium) d'un agent de broyage de l'art antérieur qui est le diéthylène glycol.
On obtient, après broyage, un carbonate de calcium dont 47,1 % et 30,0 % en poids des particules ont un diamètre moyen inférieur respectivement à 2 µm et 1 µm (tel que mesuré à partir d'un Sedigraph™ 5100).

### Essai n° 4

Cet essai illustre l'art antérieur et met en oeuvre un carbonate de calcium obtenu par broyage à sec en présence de 1400 ppm (par rapport au poids sec de carbonate de calcium) d'un agent de broyage de l'invention qui est un polymère composé, en pourcentage en poids, de 81,5 % de méthacrylate de méthoxy polyéthylène glycol de poids moléculaire 2000, de 4,9 % d'acide méthacrylique, et de 13,6 % d'acide acrylique. On obtient, après broyage, un carbonate de calcium dont 45,4 % et 28,0 % en poids des particules ont un diamètre moyen inférieur respectivement à 2 µm et 1 µm (tel que mesuré à partir d'un Sedigraph™ 5100).

Le polymère mis en oeuvre dans les essais n° 2 et 4 est obtenu par des techniques de polymérisation bien connues de l'homme du métier.

Dans un 1^{er} bécher sont introduits à température ambiante et sous agitation : 259,02 de méthacrylate de méthoxy polyéthylène glycol de poids moléculaire égal à 2000 g/mol, une solution contenant 15,36 g d'acide méthacrylique et 274,39 g d'eau, une solution contenant 69,86 g d'eau brute et 50,25 g d'acide acrylique
Dans un 2^{ème} bécher sont introduits à température ambiante et sous agitation : 2,38 g d'acide thiolactique (98.5 % de pureté massique) et 52,14 g d'eau.
Dans un 3^{ème} un bécher sont introduits à température ambiante et sous agitation : 2,84 g de persulfate d'ammonium (NH₄)₂S₂O₈ et 51,90 g d'eau.
Dans un 4^{ème} bécher sont introduits à température ambiante et sous agitation : 0,56 g de persulfate d'ammonium (NH₄)₂S₂O₈ et 10,87 g d'eau.

Dans un réacteur cylindrique simple enveloppe, surmonté d'une colonne réfrigérante, d'un système d'agitation à ancre et de 3 entrées, sont introduits 351,39 g d'eau, et de 295,61 g de d'isopropanol. Le milieu réactionnel est chauffé sous agitation (230 tours/min) à 84±2 °C. Le contenu des 3 premiers béchers est introduit dans le milieu réactionnel en 2 heures. Les canules d'introduction sont ensuite rincées avec 20,84 g d'eau (cette eau va directement dans le milieu réactionnel). On ajoute ensuite au milieu réactionnel, la solution du 4^{ème} bécher et on cuit 1 heure à 84±2 °C (à 230 tours/min). En fin de réaction, on rince avec 52,13 g d'eau. On augmente ensuite la température et on distille 604,78 g. On fait redescendre la température entre 50 et 60°C et on ajoute au milieu réactionnel 69,34 g d'hydroxyde de sodium à 50 % massique dans l'eau. Le milieu est enfin dilué avec 20,85 g d'eau. On refroidit avant d'obtenir le polymère de l'invention.

Pour chacun des essais n° 1 à 4, on a déterminé les viscosités Stormer™, ICI™ et Brookfield™ selon les méthodes bien connues de l'homme du métier.
On a aussi mesuré certaines caractéristiques optiques des peintures obtenues, tel que notamment la blancheur L, le Sous-ton "3 filtres Hunterlab", le pouvoir couvrant ou rapport de contraste, et le niveau de brillant sous des angles égaux à 60° et 85°.
Les méthodes mises en oeuvre sont notamment décrites dans le document FR 2 872 815. Les résultats figurent dans les tableaux 2 et 3.

**Tableau 2**

| Viscosités | | Essai n°1 | Essai n°2 | Essai n°3 | Essai n°4 |
|---|---|---|---|---|---|
| Instant t = 0 | µ^{I}(P) | 1,9 | 1,9 | 1,6 | 1,6 |
| | µ^{S}(K.U) | 102 | 106 | 99 | 100 |
| | µ^{B}₁₀(mPa.s) | 13700 | 15100 | 11600 | 11100 |
| | µ^{B}₁₀₀(mPa.s) | 3300 | 3600 | 2900 | 3000 |
| Instant t = 24 heures | µ^{B}₁₀(mPa.s) | 18900 | 18400 | 12700 | 12300 |
| | µ^{B}₁₀₀(mPa.s) | 4900 | 4750 | 3500 | 3100 |
| Instant t = 7 jours 50°C | µ^{B}₁₀(mPa.s) | 43900 | 32100 | 15400 | 12800 |
| | µ^{B}₁₀(mPa.s) | 14000 | 8340 | 4500 | 3200 |
| Instant t = 1 mois 50°C | µ^{B}₁₀(mPa.s) | Prise en | 42800 | 15800 | 13800 |
| | µ^{B}₁₀(mPa.s) | masse | 12000 | 4700 | 3400 |

| | | | | | |
|---|---|---|---|---|---|
| µ^{I} (P) : viscosité ICI™ µ^{S}(K.U) : viscosité Stormer™ µ^{B}₁₀ (mPa.s) : viscosité Brookfield™ déterminée à 10 tours par minute µ^{B}₁₀₀(mPa.s) : viscosité Brookfield™ déterminée à 100 tours par minute | | | | | |

**Tableau 3**

| Essai n° | 1 | 2 | 3 | 4 |
|---|---|---|---|---|
| Blancheur. Mesure du "L" | 99,2 | 99,1 | 98,7 | 98,6 |
| Sous-ton "3 filtres Hunterlab" Valeur de b | 2,2 | 2,3 | 2,3 | 2,2 |
| Pouvoir couvrant film sec Rapport de contraste | | | | |
| RC=Yn/Yb | 96,9% | 96,8% | 96,0% | 95,9% |
| Niveau de brillant | | | | |
| t = 72 h | | | | |
| 60° | 4,7 | 4,6 | 4,8 | 4,7 |
| 85° | 32,9 | 33,5 | 14,9 | 15,6 |

En comparant les essais 2 à 2 (1 à 2, et 3 à 4), on constate que les propriétés optiques des films de peinture sont dans le cadre de l'invention au même niveau que pour l'art antérieur.

En revanche, on constate une nette dérive de la viscosité Brookfield™ dans le cas des peintures formulées selon l'art antérieur. Parallèlement, cette viscosité demeure bien plus stable dans le cadre de l'invention.

On est donc parvenu à mettre au point un carbonate de calcium broyé à sec qui, en peinture, offre une viscosité Brookfield plus stable et ce, sans modifier les propriétés optiques du film sec.

## Revendications

1. Utilisation dans une peinture d'un carbonate de calcium **caractérisé en ce que** ledit carbonate est broyé à sec en présence d'un agent d'aide au broyage d'une part, et **en ce que** l'agent d'aide au broyage d'autre part est un copolymère constitué :
a) d'au moins un monomère anionique choisi parmi l'acide acrylique, l'acide méthacrylique et leurs mélanges,
b) et d'au moins un monomère non ionique, de formule (I) : 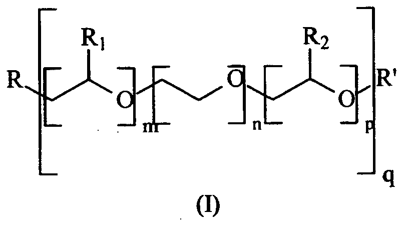 dans laquelle :
- m, n, p et q sont des entiers tels que : m, n, p ≤ 150, q ≥ 1, et 5 ≤ (m+n+p)q ≤ 150, et préférentiellement 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),
c) et éventuellement d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

2. Utilisation selon la revendication 1, **caractérisée en ce que** ledit copolymère est constitué, exprimé en pourcentage en poids des monomères (la somme des pourcentages en poids de tous les monomères étant égale à 100 %) :
a) de 0,5 % à 50 %, préférentiellement de 1 % à 25 %, très préférentiellement de 5 % à 20 %, d'au moins un monomère anionique choisi parmi l'acide acrylique, l'acide méthacrylique et leurs mélanges,
b) de 50 % à 99,5 %, préférentiellement de 75 % à 99 %, très préférentiellement de 80 % à 95 %, d'au moins un monomère non ionique, de formule (I) : 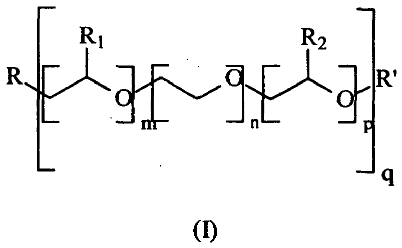 dans laquelle :
- m, n, p et q sont des entiers tels que : m,n,p ≤ 150, q ≥ 1, et 5 ≤ (m+n+p)q ≤ 150, et préférentiellement 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 4 atomes de carbone, R' étant très préférentiellement le radical méthyle,
ou du mélange de plusieurs monomères de formule (I),
c) et de 0 % à 50 % d'au moins un autre monomère choisi parmi l'anhydride (méth)acrylique, le (méth)acrylamide, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi des monomères vinyliques aromatiques tels que préférentiellement le styrène, l'α-méthylstyrène, le styrène sulfonate, ou l'acide acrylamido-2-méthyl-2-propane-sulfonique, ou parmi les monomères organophosphatés, tels que préférentiellement les phosphates d'acrylate et de méthacrylate d'éthylène glycol, ou les phosphates d'acrylate et de méthacrylate d'oxyéthylène et / ou d'oxypropylène glycol, et de leurs mélanges.

3. Utilisation, selon l'une des revendications 1 ou 2, **caractérisée en ce que** ledit copolymère est obtenu sous forme acide et éventuellement distillé, et est éventuellement partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est choisi parmi la triéthanolamine et l'hydroxyde de sodium.

4. Utilisation, selon l'une des revendications 1 à 3, **caractérisée en ce que** ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

5. Utilisation, selon l'une des revendications 1 ou 4, **caractérisée en ce que** ledit copolymère peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

6. Utilisation, selon l'une des revendications 1 à 5, **caractérisée en ce qu'**on met en oeuvre de 0,05 % à 5 %, préférentiellement de 0,1 % à 3 %, très préférentiellement de 0,1 % à 1 % en poids sec dudit copolymère, par rapport au poids sec de carbonate de calcium pendant le broyage à sec dudit carbonate.

7. Peintures **caractérisées en ce qu'**elles sont obtenues par utilisation du carbonate de calcium broyé à sec selon l'une des revendications 1 à 6.

## Patentansprüche

1. Verwendung eines Calciumcarbonats in einem Anstrichmittel, **dadurch gekennzeichnet, dass** zum einen das Carbonat in trockenem Zustand in Gegenwart eines Zerkleinerungshilfsmittels zerkleinert wird und dass zum anderen das Zerkleinerungshilfsmittel ein Copolymer ist, das aus Folgendem besteht:
a) mindestens einem anionischen Monomer, das aus Acrylsäure, Methacrylsäure und deren Mischungen ausgewählt ist,
b) und mindestens einem nichtionischen Monomer nach der Formel (I): 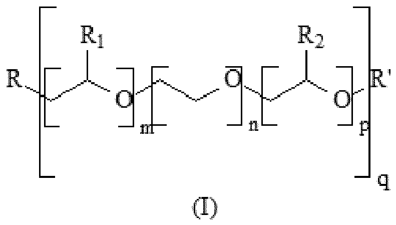 wobei:
- m, n, p und q ganze Zahlen sind, derart, dass: m, n, p ≤ 150, q ≥ 1, und 5 ≤ (m+n+p)q ≤ 150, und vorzugsweise 15 ≤ (m+n+p)q ≤ 120,
- R₁ für Wasserstoff oder einen Methyl- oder Ethylrest steht,
- R₂ für Wasserstoff oder einen Methyl- oder Ethylrest steht,
- R für einen Rest steht, der eine polymerisierbare ungesättigte Funktion enthält, welche vorzugsweise der Gruppe der Vinylverbindungen oder auch der Gruppe der Acrylsäure-, Methacrylsäure-, Maleinsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide, oder aber der Gruppe, welche aus Acrylamid und Methacrylamid besteht, angehört,
- R' für Wasserstoff oder einen Kohlenwasserstoffrest mit 1 bis 40 Kohlenstoffatomen, vorzugsweise 1 bis 4 Kohlenstoffatomen, steht, wobei es sich bei R' stark bevorzugt um einen Methylrest handelt,
oder einer Mischung mehrerer Monomere der Formel (I),
c) und möglicherweise mindestens einem weiteren Monomer, das aus (Meth)acrylsäureanhydrid, (Meth)acrylamid, oder aus den (Meth)acrylsäureestern wie etwa vorzugsweise den Acrylaten und Methacrylaten mit 1 bis 20 Kohlenstoffatomen in ihrem Esterrest, wie etwa stark bevorzugt den Methyl-, Ethyl-, Isopropyl-, n-Propyl-, Isobutyl-, n-Butyl-, tert.-Butyl-, 2-Ethylhexylacrylaten, den Methyl-, Ethylmethacrylaten, den hydroxylierten Methacrylaten wie etwa denjenigen von Hydroxyethyl und von Hydroxypropyl, oder aus den aromatischen Vinylmonomeren wie etwa vorzugsweise Styrol, α-Methylstyrol, Styrolsulfonat oder Acrylamido-2-methyl-2-propansulfonsäure, oder aus den Organophophormonomeren wie etwa vorzugsweise den Ethylenglykolacrylat- und methacrylatphosphaten, oder den Acrylat- und Methacrylatphosphaten von Ethylenoxid- und/oder Propylenoxid-Glykol, und aus deren Mischungen ausgewählt ist.

2. Verwendung nach Anspruch 1, **dadurch gekennzeichnet, dass** das Copolymer aus Folgendem besteht, ausgedrückt in Gewichtsprozentanteilen der Monomere (wobei die Summe dieser Gewichtsprozentanteile gleich 100 % ist):
a) 0,5 % bis 50 %, vorzugsweise 1 % bis 25 %, stark bevorzugt 5 % bis 20 %, mindestens eines anionischen Monomers, das aus Acrylsäure, Methacrylsäure und deren Mischungen ausgewählt ist,
b) 50 % bis 99,5 %, vorzugsweise 75 % bis 99 %, stark bevorzugt 80 % bis 95 % mindestens eines nichtionischen Monomers der Formel (I): 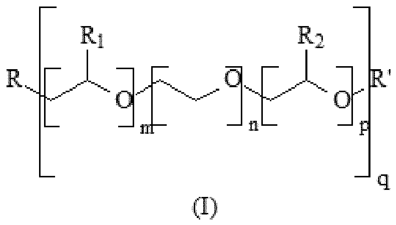 wobei:
- m, n, p und q ganze Zahlen sind, derart, dass: m, n, p ≤ 150, q ≥ 1, und 5 ≤ (m+n+p)q ≤ 150, und vorzugsweise 15 ≤ (m+n+p)q ≤ 120,
- R₁ für Wasserstoff oder einen Methyl- oder Ethylrest steht,
- R₂ für Wasserstoff oder einen Methyl- oder Ethylrest steht,
- R für einen Rest steht, der eine polymerisierbare ungesättigte Funktion enthält, welche vorzugsweise der Gruppe der Vinylverbindungen oder auch der Gruppe der Acrylsäure-, Methacrylsäure-, Maleinsäureester oder auch der Gruppe der ungesättigten Urethanverbindungen, wie etwa Acrylurethan, Methacrylurethan, α-α'-Dimethylisopropenylbenzylurethan, Allylurethan, wie auch der Gruppe der substituierten oder unsubstituierten Allyl- oder Vinylether oder aber der Gruppe der ethylenisch ungesättigten Amide oder Imide, oder aber der Gruppe, welche aus Acrylamid und Methacrylamid besteht, angehört,
- R' Wasserstoff oder einen Kohlenwasserstoffrest mit 1 bis 40 Kohlenstoffatomen, vorzugsweise 1 bis 4 Kohlenstoffatomen, darstellt, wobei es sich bei R' stark bevorzugt um einen Methylrest handelt,
oder einer Mischung mehrerer Monomere der Formel (I),
c) und 0 % bis 50 % mindestens eines weiteren Monomers, das aus (Meth)acrylsäureanhydrid, (Meth)acrylamid, oder aus den (Meth)acrylsäureestern wie etwa vorzugsweise den Acrylaten und Methacrylaten mit 1 bis 20 Kohlenstoffatomen in ihrem Esterrest, wie etwa sehr bevorzugt den Methyl-, Ethyl-, Isopropyl-, n-Propyl-, Isobutyl-, n-Butyl-, tert.-Butyl-, 2-Ethylhexylacrylaten, den Methyl-, Ethylmethacrylaten, den hydroxylierten Methacrylaten wie etwa denjenigen von Hydroxyethyl und von Hydroxypropyl, oder aus den aromatischen Vinylmonomeren wie etwa vorzugsweise Styrol, α-Methylstyrol, Styrolsulfonat oder Acrylamido-2-methyl-2-propansulfonsäure, oder aus den Organophophormonomeren wie etwa vorzugsweise den Ethylenglykolacrylat- und methacrylatphosphaten, oder den Acrylat- und Methacrylatphosphaten von Ethylenoxid- und/oder Propylenoxid-Glykol, und aus deren Mischungen ausgewählt ist.

3. Verwendung nach einem der Ansprüche 1 oder 2, **dadurch gekennzeichnet, dass** das Copolymer in saurer Form erhalten wird und möglicherweise destilliert wird sowie teilweise oder vollständig mit einem oder mehreren Neutralisierungsmitteln neutralisiert wird, welche(s) über ein einwertiges oder mehrwertiges Kation verfügt/verfügen, wobei die Mittel vorzugsweise aus Ammoniumhydroxid oder aus den Hydroxiden und/oder Oxiden von Calcium, Magnesium, oder aus den Hydroxiden von Natrium, Kalium, Lithium oder aus den primären, sekundären oder tertiären Aminen aliphatischer und/oder zyklischer Art wie etwa vorzugweise aus Stearylamin, den Ethanolaminen (Mono-, Di-, Triethanolamin), Mono- und Diethylamin, Cyclohexylamin, Methylcyclohexylamin, Aminomethylpropanol, Morpholin ausgewählt sind, und vorzugsweise dadurch, dass das Neutralisierungsmittel aus Triethanolamin und Natriumhydroxid ausgewählt ist.

4. Verwendung nach einem der Ansprüche 1 bis 3, **dadurch gekennzeichnet, dass** Copolymer durch Verfahren der radikalischen Polymerisation in Lösung, in direkter oder umgekehrter Emulsion, in Suspension oder mit Fällungsvorgang in Lösungsmitteln, in Gegenwert von katalytischen Systemen und Kettenübertragungsmitteln erhalten wird, oder auch durch Verfahren der kontrollierten radikalischen Polymerisation und vorzugsweise durch eine Polymerisation, welche mittels Nitroxiden (NMP) oder mittels Cobaloximen kontrolliert wird, durch eine radikalische Polymerisation unter Atomtransfer (ATRP), durch eine radikalische Polymerisation, welche mittels schwefelhaltiger Verbindungen, die aus den Carbamaten, den Dithioestern oder den Trithiocarbonaten (RAFT) oder den Xanthogenaten ausgewählt sind, kontrolliert wird.

5. Verwendung nach einem der Ansprüche 1 oder 4, **dadurch gekennzeichnet, dass** das Copolymer möglicherweise, vor oder nach der Reaktion der vollständigen oder teilweisen Neutralisierung, behandelt und in mehrere Phasen aufgetrennt werden kann, und zwar gemäß statischen oder dynamischen Verfahren, die dem Fachmann bekannt sind, mittels eines oder mehrerer polarer Lösungsmittel, die vorzugsweise der Gruppe angehören, welche aus Wasser, Methanol, Ethanol, Propanol, Isopropanol, den Butanolen, Aceton, Tetrahydrofuran oder deren Mischungen besteht.

6. Verwendung nach einem der Ansprüche 1 bis 5, **dadurch gekennzeichnet, dass** 0,05 % bis 5 %, vorzugsweise 0,1 % bis 3 %, stark bevorzugt 0,1 % bis 1 % nach Trockengewicht des Copolymers eingesetzt werden, unter Bezugnahme auf das Trockengewicht des Calciumcarbonats während der Zerkleinerung des Carbonats in trockenem Zustand.

7. Anstrichmittel, **dadurch gekennzeichnet, dass** sie erhalten werden, indem das Calciumcarbonat nach einem der Ansprüche 1 bis 6 verwendet wird, welches in trockenem Zustand zerkleinert wurde.

## Claims

1. Use in a paint of a calcium carbonate **characterised in that** the said carbonate is dry-ground in the presence of a grinding aid agent, firstly, and **in that** the grinding aid agent is, secondly, a copolymer, consisting:
a) of at least one anionic monomer chosen from among acrylic acid, methacrylic acid and their blends,
b) and of at least one non-ionic monomer, of formula (I): 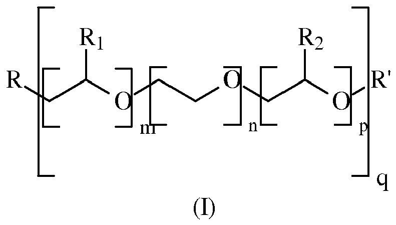 where:
- m, n, p and q are integers such that: m, n, p ≤ 150, q ≥ 1, and 5 ≤ (m+n+p)q ≤ 150, and preferentially 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides, or again to the group constituted by acrylamide and methacrylamide,
- R' represents hydrogen or a hydrocarbonated radical with 1 to 40 carbon atoms, preferentially 1 to 4 carbon atoms, where R' is very preferentially the methyl radical,
or a blend of several monomers of formula (I),
c) and possibly of at least one other monomer chosen from among (meth)acrylic anhydride, (meth)acrylamide, or from among the (meth)acrylic esters, such as preferentially the acrylates and methacrylates with 1 to 20 carbon atoms in their ester radical, such as very preferentially the methyl, ethyl, isopropyl, n-propyl, isobutyl, n-butyl, ter-butyl or 2-ethylhexyl acrylates, the methyl or ethyl methacrylates, the hydroxylated methacrylates such as the hydroxyethyl and hydroxypropyl methacrylates, or from among the aromatic vinylic monomers such as preferentially styrene, α-methylstyrene, styrene sulfonate, or acrylamido-2-methyl-2-propane-sulfonic acid, or from among the organophosphate monomers, such as preferentially the acrylate and methacrylate phosphates of ethylene glycol, or the acrylate and methacrylate phosphates of oxyethylene and/or oxypropylene glycol, and their blends.

2. Use according to claim 1, **characterised in that** the said copolymer consists, expressed as a percentage by weight of the monomers (the sum of the percentages by weight of all the monomers equals 100%):
a) 0.5% to 50%, preferentially 1% to 25%, and very preferentially 5% to 20%, of at least one anionic monomer chosen from among acrylic acid, methacrylic acid and their blends,
b) of 50% to 99.5%, preferentially 75% to 99%, and very preferentially 80% to 95%, of at least one non-ionic monomer, of formula (I): 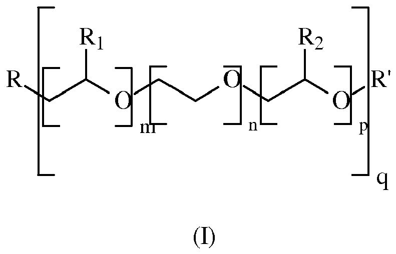 where:
- m, n, p and q are integers such that: m, n, p ≤ 150, q ≥ 1, and 5 ≤ (m+n+p)q ≤ 150, and preferentially 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides, or again to the group constituted by acrylamide and methacrylamide,
- R' represents hydrogen or a hydrocarbonated radical with 1 to 40 carbon atoms, preferentially 1 to 4 carbon atoms, where R' is very preferentially the methyl radical,
or a blend of several monomers of formula (I),
c) 0% to 50% of at least one other monomer chosen from among (meth)acrylic anhydride, (meth)acrylamide, or from among the (meth)acrylic esters, such as preferentially the acrylates and methacrylates with 1 to 20 carbon atoms in their ester radical, such as very preferentially the methyl, ethyl, isopropyl, n-propyl, isobutyl, n-butyl, ter-butyl or 2-ethylhexyl acrylates, the methyl or ethyl methacrylates, the hydroxylated methacrylates such as the hydroxyethyl and hydroxypropyl methacrylates, or from among the aromatic vinylic monomers such as preferentially styrene, α-methylstyrene, styrene sulfonate, or acrylamido-2-methyl-2-propane-sulfonic acid, or from among the organophosphate monomers, such as preferentially the acrylate and methacrylate phosphates of ethylene glycol, or the acrylate and methacrylate phosphates of oxyethylene and/or oxypropylene glycol, and their blends.

3. Use, according to one of the claims 1 or 2, **characterised in that** the said copolymer is obtained in the acidic form and possibly distilled, and is possibly partially or totally neutralised by one or more neutralisation agents having a monovalent or polyvalent cation, where the said agents are chosen preferentially from among ammonia or from among calcium, magnesium hydroxides and/or oxides, or from among sodium, potassium or lithium hydroxides, or from among the aliphatic and/or cyclic primary, secondary or tertiary amines, such as preferentially stearylamine, the ethanolamines (mono-, di- and triethanolamine), mono- and diethylamine, cyclohexylamine, methylcyclohexylamine, amino methyl propanol, morpholine, and preferentially **in that** the neutralisation agent is chosen from among triethanolamine and sodium hydroxide.

4. Use, according to one of the claims 1 to 3, **characterised in that** the said copolymer is obtained by processes of radical polymerisation in solution, in a direct or reverse emulsion, in suspension or precipitation in solvents, in the presence of catalytic systems and chain transfer agents, or again by processes of controlled radical polymerisation, and preferentially by nitroxide mediated polymerisation (NMP) or by cobaloximes, by atom transfer radical polymerisation (ATRP), by controlled radical polymerisation by sulphurated derivatives, chosen from among carbamates, dithioesters or trithiocarbonates (RAFT) or xanthates.

5. Use, according to one of the claims 1 to 4, **characterised in that** the said copolymer may be, before or after the total or partial neutralisation reaction, treated and separated into several phases, according to static or dynamic processes known to the skilled man in the art, by one or more polar solvents belonging preferentially to the group constituted by water, methanol, ethanol, propanol, isopropanol, the butanols, acetone, tetrahydrofuran or their blends.

6. Use, according to one of the claims 1 to 5, **characterised in that** 0.05% to 5%, preferentially 0.1 % to 3%, and very preferentially 0.1 % to 1%, by dry weight of the said copolymer relative to the dry weight of calcium carbonate is used during the dry grinding of the said carbonate.

7. Paints **characterised in that** they are obtained by use of the dry-ground calcium carbonate according to one of the claims 1 to 6.
